# EUROPEAN PATENT SPECIFICATION

(11) **EP 2 436 535 B1**
(45) Date of publication and mention of the grant of the patent: **23.10.2013**
(21) Application number: 11183586.4
(22) Date of filing: 30.09.2011
(51) Int. Cl.: B60C 11/04, B60C 11/13, B60C 11/12

(54) **Tire tread**
Reifenlauffläche
Bande de roulement de pneu

(30) Priority: 01.10.2010 US 895943
(43) Date of publication of application: 04.04.2012
(73) Proprietor: The Goodyear Tire & Rubber Company, Akron, OH 44316-0001 (US)
(72) Inventor: Scheuren, Daniel, B-6700 Arlon (BE)
(74) Representative: Kutsch, Bernd

(56) References cited:
- EP-A1- 0 787 600
- US-A- 3 727 661
- US-A1- 2003 024 621

## Description

### Field of the Invention

The invention relates generally to a tread for a tire and, more specifically, to a tread having improved frictional energy over the footprint of the tire, and to a tire comprising such a tread. The tread may be used with a new tire but may also be used as a tread strip for retreading tire. The tire is preferably a truck tire.

### Background of the Invention

The tread region of a tire is engineered to accomplish a number of objectives, including optimizing gas mileage of the tire and resisting undesirable effects of frictional wear on the tread. Without optimal tread design, gas mileage attained by the tread and frictional wear performance of the tire tread may be compromised. It is, accordingly, desirable to provide a tread configuration that will optimize tire performance such as rated gas mileage while mitigating the undesirable effects of friction on the tire tread over time and wear.

US-A- 2003/0024621 describes a tire tread in accordance with the preamble of claim 1.

US-A- 3,727,661 describes a tire having axially adjacent circumferential ribs connected by transverse crossbars.

### Summary of the Invention

The invention relates to a tire tread in accordance with claim 1. The tire tread may be in the form of a or tire tread strip for retreading tires. The invention also relates to a pneumatic tire in accordance with claim 9.

Dependent claims refer to preferred embodiments of the invention.

According to a preferred aspect of the invention, a tire has a tread region in which a first block element and a second adjacent block element are spaced apart by a groove and a reinforcement element in the shape of a bar or a hump which is situated within the groove. The reinforcement element extends between the first and second adjacent blocks and includes a radially outward inclined surface extending at a prescribed inclination angle from the first block to the second block.

Pursuant to a further preferred aspect, the inclined surface of the reinforcement element or bar extends from a radially inward end abutting the first block element at a deeper radial depth within the groove to a radially outward end abutting the second block element at a radially more shallow depth within the groove. The inclined surface of the reinforcement element (or bar or hump) has a radially outwardly facing concave surface portion at the radially inward inclined surface end. The prescribed angle of inclination, in another aspect, extends from the concave surface portion at approximately forty-five degrees, such as between 35 to 55 degrees, preferably 40 to 50 degress such as 45 degress, to the radially outward end of the inclined surface.

### Definitions

"Axial" and "axially" means lines or directions that are parallel to the axis of rotation of the tire.

"Circumferential" means lines or directions extending along the perimeter of the surface of the annular tread perpendicular to the axial direction.

"Counterforts" are reinforcement buttresses or piers built up against a block element or rib to strengthen it an act as stiffeners to reduce the bending and shearing stresses.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Groove" means an elongated void area in a tread that may extend circumferentially or laterally about the tread in a straight, curved, or zigzag manner. Circumferentially and laterally extending grooves sometimes have common portions. The "groove width" is equal to tread surface area occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such narrow or wide grooves are substantially reduced depth as compared to wide circumferential grooves which the interconnect, they are regarded as forming "tie bars" tending to maintain a rib-like character in tread region involved.

"Inboard side" means the side of the tire nearest the vehicle when the tire is mounted on a wheel and the wheel is mounted on the vehicle.

"Lateral" means an axial direction.

"Lateral edges" means a line tangent to the axially outermost tread contact patch or footprint as measured under normal load and tire inflation, the lines being parallel to the equatorial centerplane.

"Net contact area" means the total area of ground contacting tread elements between the lateral edges around the entire circumference of the tread divided by the gross area of the entire tread between the lateral edges.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Sipe" means small slots molded into the tread elements of the tire that subdivide the tread surface and improve traction, sipes are generally narrow in width and close in the tires footprint as opposed to grooves that remain open in the tire's footprint.

"Tread element" or "traction element" means a rib or a block element defined by having a shape adjacent grooves.

"Tread Arc Width" means the arc length of the tread as measured between the lateral edges of the tread.

### Brief Description of the Drawings

The invention will be described by way of example and with reference to the accompanying drawings in which:
Fig. 1A is an isometric view of a tire showing the counterfort reinforcement bars.
Fig. 1B is an enlarged fragmentary view taken from Fig. 1.
Fig. 2A is a front elevational view of tire.
Fig. 2B is an enlarged fragmentary view taken from Fig. 2.
Fig. 3 is an enlarged view of block elements taken from Fig. 2A.
Fig. 4 is a sectioned view taken through the groove on Fig. 2A.
Fig. 5 is a sectioned view taken through the reinforcement bar on Fig. 2A.
Figs. 6A and 6B are enlarged views of block elements and reinforcement bars at full tread height.
Fig. 7A and 7B are enlarged views of block elements and reinforcement bars shown with one-third (1/3) tread wear, i.e. 1/3 worn.
Fig. 8A and 8B are enlarged views of block elements and reinforcement bars shown with one-half (1/2) tread wear, i.e. 1/2 worn.
Fig. 9A and 9B are enlarged view of block element and reinforcement bar shown with two-thirds (2/3) tread wear, i.e. 2/3 worn.
Fig. 10A is an enlarged plan view of tread and reinforcement bars shown with no wear.
Fig. 10B is an enlarged plan view of tread and reinforcement bars shown one-third (1/3) worn.
Fig. 10C is an enlarged plan view of tread and reinforcement bars shown one-half (1/2) worn.
Fig. 10D is an enlarged plan view of tread and reinforcement bars shown two-thirds (2/3) worn.

### Detailed Description of the Invention

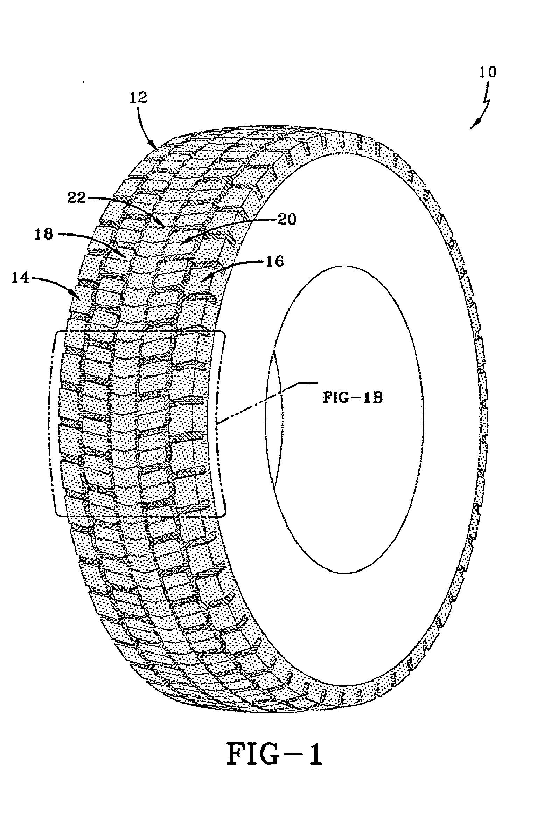

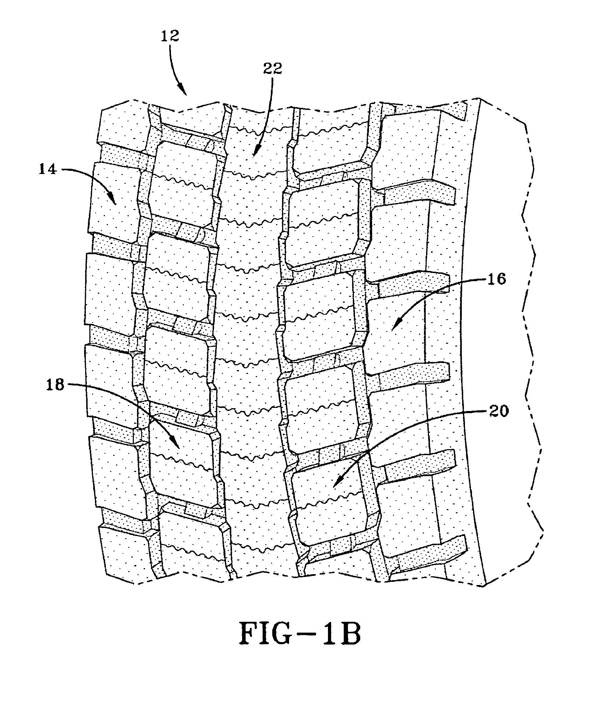

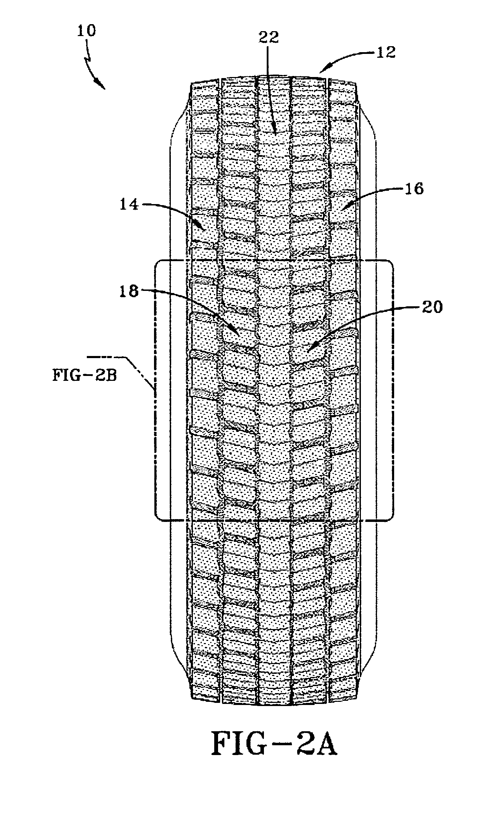

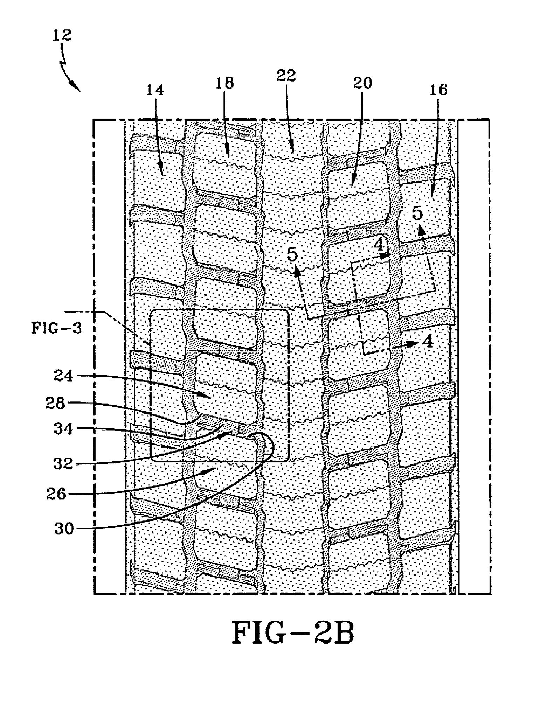

Referring to FIGS. 1 A, 1B, 2A and 2B, a tire 10 includes a tread region 12 have a tread pattern of illustrative configuration. The tread region 12 preferably includes a pair of outer shoulder rows 14, 16 of tread block elements, one or more intermediate rows of tread block elements 18, 20 positioned inward and adjacent respective shoulder rows 14, 16, and a center row of tread block elements 22 on an equatorial centerline of the tire and tread region. The invention is not confined to the tread pattern shown but has wider application for alternative tread configurations as will be appreciated.

The tread region block elements include adjacent pairs of block elements such as block elements 24, 26. The block elements may be of various configurations and geometric shapes if desired, with the pairs of block elements having opposed and mutually facing block element sidewalls 28, 30 separated by a groove 32. While the groove 32 identified extends in an inclining axial direction as shown, other block and groove orientations may be employed without departing from the use of the invention.

A counterfort reinforcement element 34 is positioned within the separation groove 32 and extends between the opposed sidewalls 28, 30 of the pair of opposed block elements 24, 26. The reinforcement element 34, referred alternatively herein as a "bar" or a "hump", extends between block elements 24, 26 and functions as a reinforcement buttresses or pier built up against the block elements 24, 26 to strengthen the block elements and act as stiffeners to reduce the bending and shearing stresses on such elements. As will be appreciated below, such reinforcements in the configuration shown effectively accomplish a stiffening and reinforcement of the block elements without degrading the desired traction and handling characteristics of the tread.

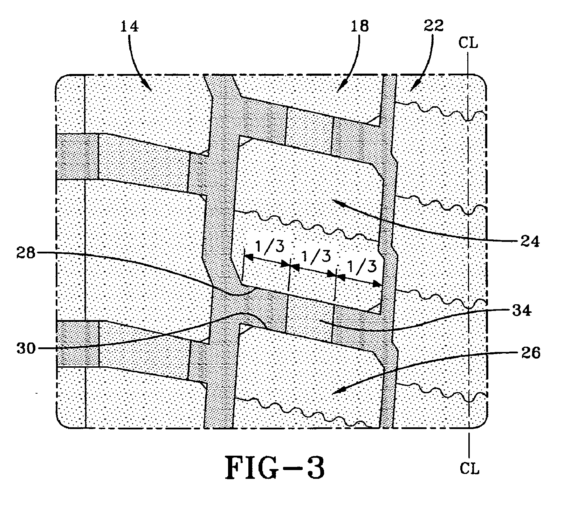

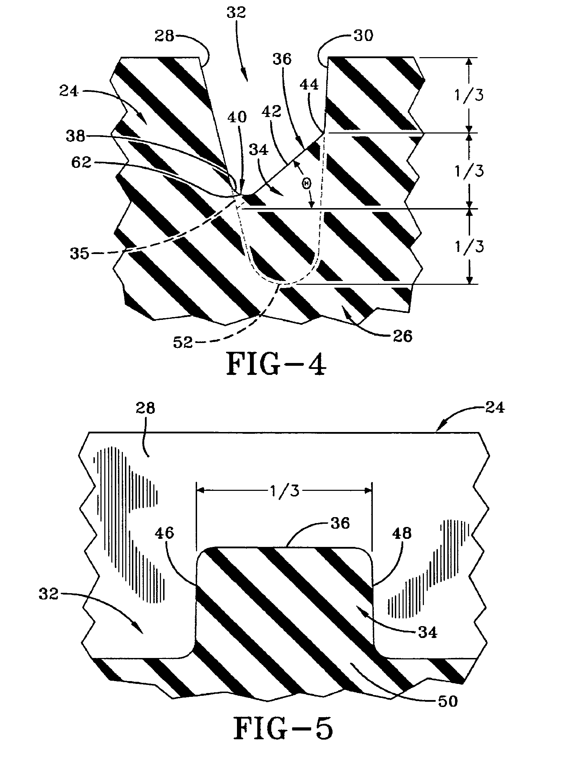

The reinforcement element as a hump or bar 34 is situated at the base end of the groove 32 and configured having a top surface 36 that intersects the block element 24 at a low or deep surface end 38 and inclines therefrom through an inclined medial surface portion 42 to intersect the block element 26 by a high or shallow end 44. As shown by FIGS. 3, 4, 5, 6A, and 6B, the top surface 36 includes a radially outward facing concave surface portion 40 adjacent the radially inward deep end 38. The radially inward end 38 of the surface 36 is thus higher within the groove 32 at the point of intersection with wall 28 of the block element 26 than the bottom of the concave surface portion 40. Accordingly, the reinforcement bar 34 intersects a greater surface area of the wall 28 of block element 26 to provide relatively greater reinforcement of the element 26 than would otherwise occur if the concave portion were eliminated and inclined medial surface 42 of the inclined surface 36 extended hypothetically to intersection point 35. The presence of the concave surface portion 40 thus allows for wide surface engagement between the reinforcement bar 34 and the block element surface 28 and a relatively steep angle of inclination to the inclined surface medial portion 42. The angle of inclination θ of the surface medial portion 42 is approximately 45 degrees as shown in FIG. 4. The angle of inclination θ may however also be between 35 to 55 degrees, preferably 40 to 50 degress.

From FIG. 5 it will be seen that the reinforcement element 34 is designed as a bar generally rectangular in cross-section (cutting in the axial direction) extending between sidewalls 46, 48 and centered within the groove 32. The reinforcement element 34 or bar is integrally formed at its base 50 with the tread and is preferably dimensioned to be one-third (1/3) or about 33%, alternatively 20% to 50% or 25% to 40%, of the axial width of the groove 32 and the block elements 24, 26. As seen from FIG. 4, the radially inward, low end 38 of the reinforcement element 34 or bar is positioned 60% to 72% of the depth of the groove 32 as measured from the top of the block elements 24, 26 to the groove bottom 52. The high, or radially outward end 44 of the reinforcement element 34 or bar is recessed a distance of 25% to 40% groove depth below the tops of tread elements 24, 26. Accordingly, the radial extend of the reinforcement element 34 or bar is preferably one-third (1/3) or about 33%, alternatively 10% to 40% or 25% to 40%, groove depth.

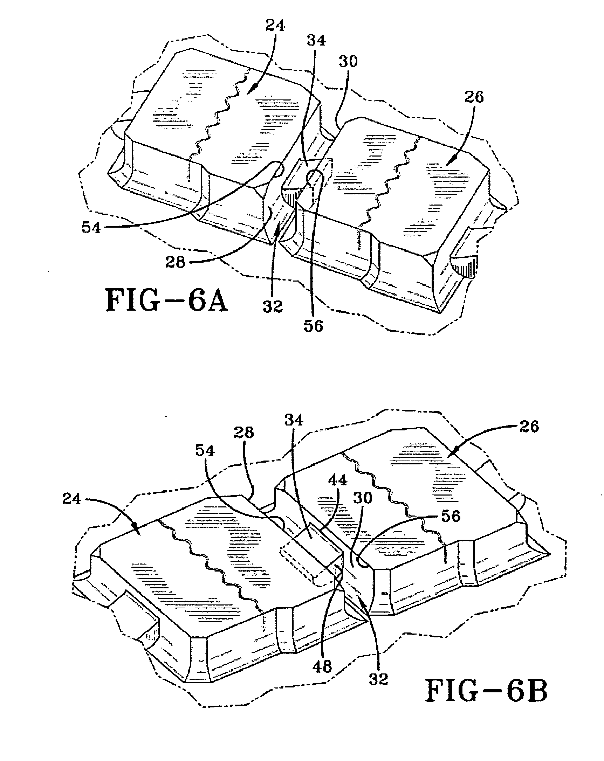

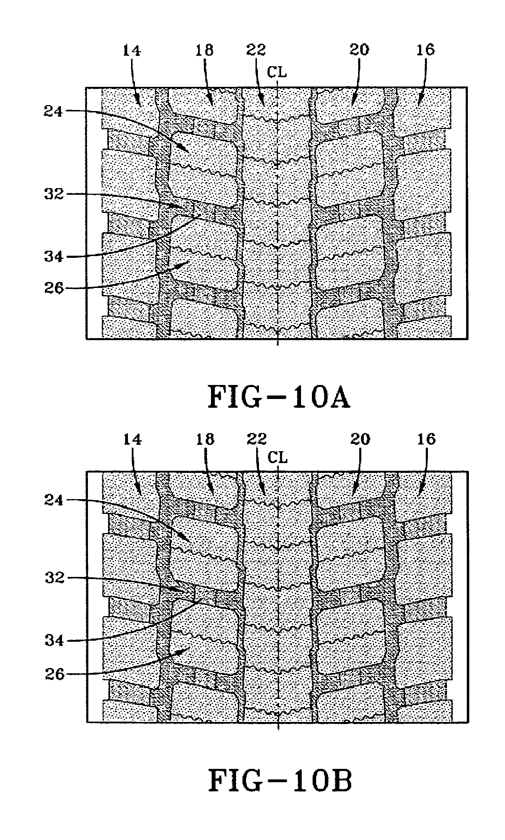

FIGS. 6A, 6B and 10A show the tread block elements 24, 26, spacing groove 32, and reinforcement bar 34 at initial full thread configuration prior to tread wear.

As will be appreciated, the inclined bar or hump 34 is recessed within the spacing groove 32, by one-third (1/3) groove depth in this example. So positioned and configured, the bar or hump 34 fulfills its function of stiffening and reinforcing the block elements 24, 26 to reduce the bending and shearing stresses on such elements while not interfering with the edges of the block elements 24, 26 that provide requisite traction characteristics. The gas mileage performance of the tire, as impacted by tread block element preservation and wear characteristics, is consequently not compromised.

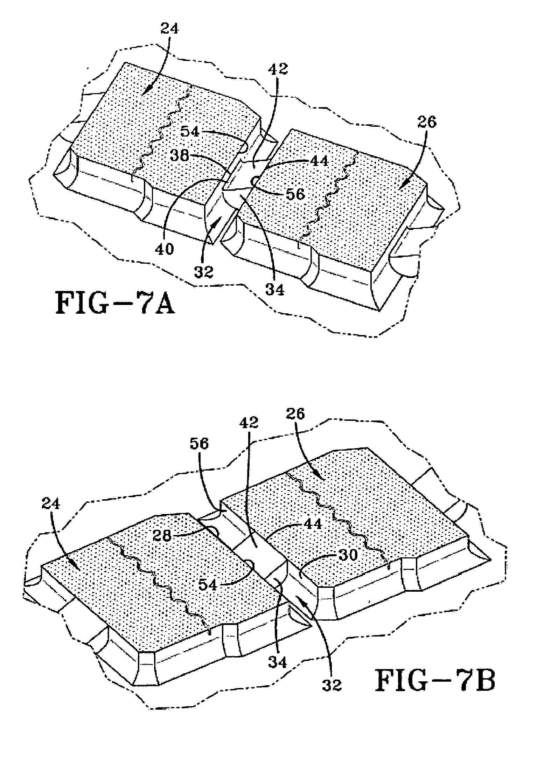

FIGS. 7A, 7B and 10B show the tread block elements 24, 26 in a condition one-third (1/3) worn. As shown, at this stage of tread wear, the outward road engaging surfaces of the block elements 24, 26 have worn radially to where edges 54, 56 are at the radially outward "high" end 44 of the inclined bar or hump 34. At one-third (1/3) wear level, the bar 34 continues to function as reinforcement buttress to the block elements 24, 26 and does not constitute a rib design spanning between the block elements 24, 26. It is beneficial to avoid bar 34 evolving through tread wear into a rib having an upper surface coplanar with the engaging surfaces of block elements 24, 26. Preserving the presence and function of edge 56 throughout tread wear improves heel and toe wear of the block elements and improve total mileage attained by the tire. In addition, frictional energy distribution over the tire footprint is improved.

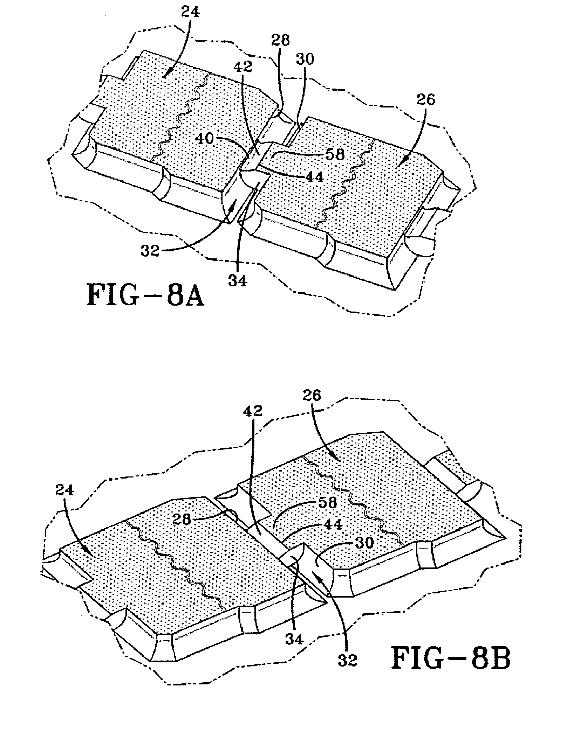

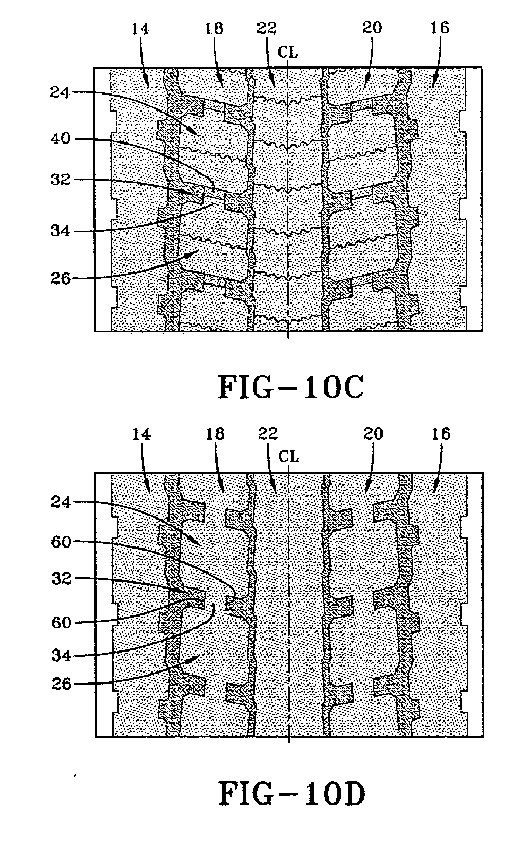

FIGS. 8A, 8B and 10C show the tread block elements 24, 26 in a condition one-half (1/2) worn in the radial direction. It will be seen that, at this stage of tread wear, the outward road engaging surfaces of the block elements 24, 26 have worn to where edge 56 extends outward over the groove 32 and forms a bridging surface portion 58. However, the edge 56 still exists at a forward end of the bridging portion 58 at one-half (1/2) wear level, whereby preserving the traction and energy distribution advantages provided. The bar 34 continues to function as reinforcement buttress to the block elements 24, 26 and has not undesirably evolved into a rib design coplanar with the road engaging surfaces of the block elements 24, 26. Preserving the presence and function of edge 56 throughout even one-half (1/2) tread wear levels continues the improved heel and toe wear of the block elements and improve total mileage attained by the tire. In addition, improved frictional energy distribution over the tire footprint provided by the reinforcement bar 34 is maintained.

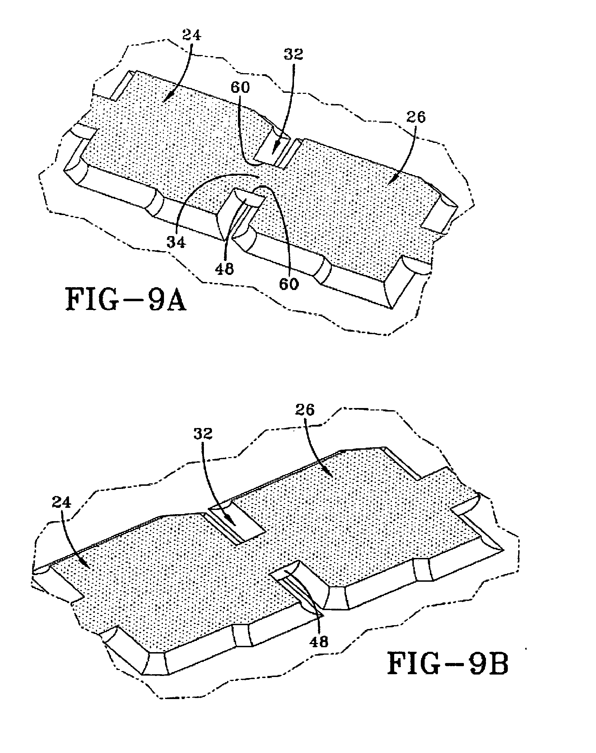

FIGS. 9A, 9B, and 10D show the tread block elements 24, 26 in a condition two-thirds (2/3) worn. As shown, at this stage of tread wear, the outward road engaging surfaces of the block elements 24, 26 have worn radially to the point where edge 56 is eliminated. The width dimension of the reinforcement bar 34 relative to the width of the block elements 24, 26 (1/3), however, maintains edges along opposed block elements 24, 26 and the lateral edges 60 of the bar 34 to continue desired tread traction performance.

From the foregoing it will be appreciated that the tread region adjacent first block element and second block element are only representative of tread block elements which may utilize the reinforcement bar system described. Other configurations of tread patterns and block geometries may be substituted without departing from the invention. The connective reinforcement bar 34 would directionally change to suit the orientation of the block elements. Thus, the reinforcement bar 34 may be oriented circumferentially or at an angular disposition with respect to the centerline (C/L) as shown in FIG. 10D. In addition, the inclination angle of the reinforcement bar, shown generally to be 45 degrees, may be altered to suit the tread performance desired as will be apparent to those skilled in the art. A higher or lower degree of inclination may be deployed to attain the wear characteristics of the block elements desired.

Still further, the depth of the ends of the inclined surface of the reinforcement bar within the groove 32 may be altered to suit the tread wear and energy distribution requirements of a given tire. The two-third (2/3) radial groove depth location of the radially inward end of inclined surface 36 and the one-third (1/3) radial groove depth location of the shallow end 44 of the surface 36 may be varied to suit the inclination angle and desired wear characteristics of the tread.

The inclined surface 36 of the reinforcement bar 34 as described includes the radially outwardly facing concave surface portion 40 at the radially inward inclined surface end 38. The end 38 of the surface 36 is thus upturned against block element 24 to enlarge surface to surface abutment area between the bar 34 and the block element 24. The buttressing reinforcement provided to such block element 24 is thus enhanced. By routing the surface 36 through the concave surface portion 40 to a radially inwardmost bight 62 of the concave portion 40 (see FIG. 4), the beginning radial depth of the inclined medial portion 42 of the surface 36 from the concave portion 40 is lowered. In lowering the beginning radial depth of the medial portion 42 to the bight level 62 of concave portion 40, the inclination angle of the surface may be increased to the opposite block 26.

## Claims

1. A tread having a tread region (12) comprising a plurality of spaced apart block elements (18, 20), the tread region (12) having at least a first and a second circumferentially adjacent block element pair (24, 26) spaced apart by a groove (32) having a groove bottom (52) and at least one reinforcement element (34) situated within the groove (32) and extending between the first and second circumferentially adjacent block element pair (24, 26), the reinforcement element (34) having a radially outward inclined surface (42) extending at a prescribed inclination angle from the first to the second block (24, 26), **characterized in that** the inclined surface (42) of the reinforcement element (34) has a radially outwardly facing concave surface portion (40) at the radially inward inclined surface end (38) of the reinforcement element (34), and **in that** the radially inward inclined surface end (38) of the reinforcement element (34) is positioned in a range of from at 60% to 72% of the depth of the groove (32) as measured from the top of the pair of circumferentially adjacent block elements (24, 26) to the groove bottom (52) and the radially outward end (44) of the reinforcement element (34) is recessed a distance in a range of from 25% to 40% of the groove depth (32) from the tops of the circumferentially adjacent block elements (24, 26).

2. The tread of claim 1 wherein the reinforcement element (34) is a bar or a hump.

3. The tread of at least one of the previous claims wherein the inclined surface of the reinforcement element (34) extends from the radially inward end (38) at substantially two-thirds the depth of the groove (32) to the radially outward end (44) at substantially one-third the depth of the groove (32).

4. The tread of at least one of the previous claims wherein the reinforcement element (34) extends substantially circumferentially between the first and second adjacent block elements.

5. The tread of at least one of the previous claims wherein the reinforcement element (34) has a nominal width less than a nominal width of the first and second adjacent block elements (24, 26).

6. The tread of claim 5 wherein the reinforcement element (34) has a nominal width in a range of from alternatively 20% to 50% or form 25% to 40% of the axial width of the first and second adjacent block elements (24, 26).

7. The tread of at least one of the previous claims wherein the concave surface portion (40) of the inclined surface (42) is positioned within the groove (32) at a substantially two-third radial groove depth level.

8. The tread of at least one of the previous claims wherein the prescribed inclination angle is substantially forty-five degrees or is in a range of from 35 to 55 degrees or from 40 to 50 degrees.

9. A tire comprising a tread in accordance with at least one of the previous claims.

## Patentansprüche

1. Lauffläche mit einem Laufflächenbereich (12), umfassend eine Vielzahl voneinander beabstandeter Blockelemente (18, 20), wobei der Laufflächenbereich (12) mindestens ein erstes und ein zweites in Umfangsrichtung benachbartes Blockelementpaar (24, 26) aufweist, das durch eine Rille (32) beabstandet ist, die einen Rillengrund (52) und mindestens ein Verstärkungselement (34) aufweist, das sich in der Rille (32) befindet und sich zwischen dem ersten und zweiten in Umfangsrichtung benachbarten Blockelementpaar (24, 26) erstreckt, wobei das Verstärkungselement (34) eine radial auswärts geneigte Fläche (42) aufweist, die sich in einem vorgeschriebenen Neigungswinkel von dem ersten zu dem zweiten Block (24, 26) erstreckt, **dadurch gekennzeichnet, dass** die geneigte Fläche (42) des Verstärkungselements (34) einen radial auswärts gewandten konkaven Oberflächenteil (40) an dem radial einwärts befindlichen Ende (38) der geneigten Oberfläche des Verstärkungselements (34) aufweist, und dass das radial einwärts befindliche Ende (38) der geneigten Oberfläche des Verstärkungselements (34) in einem Bereich von auf 60% bis 72% der Tiefe der Rille (32), gemessen ab der Oberseite des Paars in Umfangsrichtung benachbarter Blockelemente (24, 26) zu dem Rillengrund (52), positioniert ist und das radial auswärts befindliche Ende (44) des Verstärkungselements (34) um einen Abstand in einem Bereich von 25% bis 40% der Rillentiefe (32) von den Oberseiten der in Umfangsrichtung benachbarten Blockelemente (24, 26) einspringt.

2. Lauffläche nach Anspruch 1, wobei das Verstärkungselement (34) ein Balken oder ein Höcker ist.

3. Lauffläche nach mindestens einem der vorgenannten Ansprüche, wobei die geneigte Fläche des Verstärkungselements (34) sich von dem radial einwärts befindlichen Ende (38) auf im Wesentlichen zwei Dritteln der Tiefe der Rille (32) zu dem radial auswärts befindlichen Ende (44) auf im Wesentlichen einem Drittel der Tiefe der Rille (32) erstreckt.

4. Lauffläche nach mindestens einem der vorgenannten Ansprüche, wobei das Verstärkungselement (34) sich im Wesentlichen in Umfangsrichtung zwischen dem ersten und dem zweiten benachbarten Blockelement erstreckt.

5. Lauffläche nach mindestens einem der vorgenannten Ansprüche, wobei das Verstärkungselement (34) eine nominale Breite aufweist, die weniger als eine nominale Breite des ersten und des zweiten benachbarten Blockelements (24, 26) beträgt.

6. Lauffläche nach Anspruch 5, wobei das Verstärkungselement (34) eine nominale Breite in einem Bereich von alternativ 20% bis 50% oder von 25% bis 40% der axialen Breite des ersten und zweiten benachbarten Blockelements (24, 26) aufweist.

7. Lauffläche nach mindestens einem der vorgenannten Ansprüche, wobei der konkave Oberflächenteil (40) der geneigten Oberfläche (42) in der Rille (32) auf einem im Wesentlichen zwei Drittel betragenden radialen Rillentiefenniveau positioniert ist.

8. Lauffläche nach mindestens einem der vorgenannten Ansprüche, wobei der vorgeschriebene Neigungswinkel im Wesentlichen fünfundvierzig Grad beträgt oder in einem Bereich von 35 bis 55 Grad oder von 40 bis 50 Grad liegt.

9. Reifen, umfassend eine Lauffläche gemäß mindestens einem der vorgenannten Ansprüche.

## Revendications

1. Bande de roulement possédant une zone de bande de roulement (12) comprenant plusieurs éléments en forme de blocs espacés les uns des autres (18, 20), la zone de bande de roulement (12) possédant au moins une première et deuxième paires d'éléments en forme de blocs (24, 26) adjacents en direction circonférentielle, espacées l'une de l'autre par une rainure (32) possédant une base de rainure (52) et au moins un élément de renforcement (34) situé au sein de la rainure (32) et s'étendant entre les première et deuxième paires d'éléments en forme de blocs (24, 26) adjacentes en direction circonférentielle, l'élément de renforcement (34) possédant une surface (42) inclinée vers l'extérieur en direction radiale, s'étendant en formant un angle d'inclinaison inscrit depuis le premier jusqu'au deuxième en forme bloc (24, 26), **caractérisée en ce que** la surface inclinée (42) de l'élément de renforcement (34) possède une portion superficielle concave (40) orientée vers l'extérieur en direction radiale à l'extrémité (38) de la surface inclinée vers l'intérieur en direction radiale, de l'élément de renforcement (34), et **en ce que** l'extrémité (38) de la surface inclinée vers l'intérieur en direction radiale, de l'élément de renforcement (34) est disposée dans la plage de 60 % à 72 % de la profondeur de rainure (32), telle qu'on la mesure à partir du sommet de la paire d'éléments en forme de blocs (24, 26) adjacents en direction circonférentielle jusqu'à la base (52) de la rainure, et l'extrémité externe en direction radiale (44) de l'élément de renforcement (34) est évidée sur une distance dans la plage de 25 % à 40 % de la profondeur de rainure (32) à partir du sommet des éléments en forme de blocs (24, 26) adjacents en direction circonférentielle.

2. Bande de roulement selon la revendication 1, dans laquelle l'élément de renforcement (34) est une barre ou une bosse.

3. Bande de roulement selon au moins une des revendications précédentes, dans laquelle la surface inclinée de l'élément de renforcement (34) s'étend depuis l'extrémité interne en direction radiale (38) à essentiellement deux tiers de la profondeur de la rainure (32) jusqu'à l'extrémité externe en direction radiale (44) à essentiellement un tiers de la profondeur de la rainure (32).

4. Bande de roulement selon au moins une des revendications précédentes, dans laquelle l'élément de renforcement (34) s'étend essentiellement en direction circonférentielle entre les premier et deuxième éléments adjacents en forme de blocs.

5. Bande de roulement selon au moins une des revendications précédentes, dans laquelle l'élément de renforcement (34) possède une largeur nominale inférieure à la largeur nominale des premier et deuxième éléments adjacents en forme de blocs (24, 26).

6. Bande de roulement selon la revendication 5, dans laquelle l'élément de renforcement (34) possède une largeur nominale dans la plage de 20 % à 50 % ou en variante de 25 à 40 % de la large axiale des premier et deuxième éléments adjacents en forme de blocs (24, 26).

7. Bande de roulement selon au moins une des revendications précédentes, dans laquelle la portion superficielle concave (40) de la surface inclinée (42) est disposée au sein de la rainure (32) à un niveau correspondant essentiellement aux deux tiers de la profondeur de la rainure radiale.

8. Bande de roulement selon au moins une des revendications précédentes, dans laquelle l'ongle d'inclinaison inscrit représente essentiellement 45° ou se situe dans la plage de 35 à 55° ou bien de 40 à 50°.

9. Bandage pneumatique comprenant une bande de roulement selon au moins une des revendications précédentes.
